(19) Europäisches Patentamt
European Patent Office
Office européen des brevets

(11) **EP 4 030 708 A1**

(12) **EUROPEAN PATENT APPLICATION**

(43) Date of publication:
**20.07.2022 Bulletin 2022/29**

(21) Application number: **21382040.0**

(22) Date of filing: **19.01.2021**

(51) International Patent Classification (IPC):
**H04L 12/815** (2013.01)   **H04L 12/863** (2013.01)
**H04L 12/867** (2013.01)   **H04L 12/801** (2013.01)

(52) Cooperative Patent Classification (CPC):
**H04L 47/22; H04L 47/6265; H04L 47/629;**
**H04L 47/127**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Nokia Solutions and Networks Oy
02610 Espoo (FI)**

(72) Inventors:
• **Drooghaag, Benoit
1421 Ophain-Bois-Seigneur-Isaac (BE)**
• **Diestelmans, Jan
2440 Geel (BE)**
• **Kora, Sireesha
Raleigh, NC 27617 (US)**
• **Fouz Perez, Pedro
28231 Las Rozas de Madrid (ES)**

(74) Representative: **Zinsinger, Norbert et al
Louis, Pöhlau, Lohrentz
Patentanwälte
Postfach 30 55
90014 Nürnberg (DE)**

(54) **METHOD AND APPARATUS FOR BANDWIDTH ALLOCATION**

(57)   The present invention discloses an apparatus, comprising means for: obtaining an indication of contention of a communications network; obtaining a historical bandwidth utilization indication parameter of respective participants of the communications network; determining, based on the indication of contention and the historical bandwidth utilization indication, a scheduler parameter and/or a shaper parameter for being provided to an output of the apparatus, wherein, the scheduler parameter and/or the shaper parameter is related to allocating bandwidth to a participant of the network.

Fig. 1

EP 4 030 708 A1

**Description**

Field of the invention

Various example embodiments relate to bandwidth allocation, specifically to determining of scheduler parameter and/or shaper parameter.

Background

The sharing of bandwidth in a network between multiple clients is typically handled by Weighted Fair Queue (WFQ) scheduler components. In this sharing scheme, a weight is given to each client. Each of them will receive a fraction of the total bandwidth which is proportional to their weight. By design, if any client would not be active or not request his entitled bandwidth fraction, this "free" or spare bandwidth is automatically distributed among the active clients, proportionally to the weights of those active clients. In worst case, the minimum bandwidth that each client will receive is equal to the total bandwidth multiplied by the ratio of its weight over the sum of the weights of all the clients. In best case, if there would be only one active client at a certain time, this client would get the full bandwidth.

However, in case of one or more abnormally high demanding or even potentially abusing users, these mechanisms tend to discriminate the other users. Such situations may happen when residential subscribers would host unusual services creating very high bandwidth request for example in case of P2P storage networks, or when a company would clearly abuse a residential subscription to offer commercial services.

In a slicing context, where a physical access node is virtually divided into multiple virtual access nodes, each of them being managed by a Virtual Network Operator hereafter abbreviated by VNO, serving its own subset of subscribers, the problem is even worse. In this mode, VNOs are isolated from each other, meaning that they only have visibility and control on the bandwidth of their own subscribers. In this mode also, the physical access node is actually managed by an Infrastructure provider, hereafter abbreviated by InP, who is in charge of sharing the bandwidth among the multiple VNOs. However, the InP has no direct visibility on the bandwidth utilization of the VNO subscribers. Therefore, if the abusing subscriber is not managed properly by the entity of the virtual network serving it, the subscribers of other virtual networks may be impacted as well.

A typical way to prevent subscribers to saturate a network is to couple WFQ schedulers with traffic shapers. Those shapers act as limiters, preventing a client to request a bandwidth higher than a configurable limit. However also these combined scheduler/shaper systems still do not sufficiently cope with the aforementioned problems of potentially abusing users.

There is thus a need for an improved method and apparatus to solve the aforementioned problems.

Summary of the Invention

According to a first aspect of the invention, there is provided an apparatus comprising means for obtaining an indication of contention of a communications network; obtaining a historical bandwidth utilization indication parameter of respective participants of the communications network; determining, based on the indication of contention and the historical bandwidth utilization indication, a scheduler parameter and/or a shaper parameter for being provided to an output of the apparatus, wherein, the scheduler parameter and/or the shaper parameter is related to allocating bandwidth to a participant of the network.

In one embodiment, the means are further configured to repeat the obtaining of said indication of contention; the obtaining of said historical bandwidth utilization indication parameter and the determining of said scheduler parameter and/or said shaper parameter at predetermined time intervals.

In another embodiment, the means are further configured for: determining a predicted indication of contention, based on history of the obtained indication of contention; and determining the scheduler parameter and/or the shaper parameter further based on the predicted indication of contention.

In a further embodiment, the means are further configured for: determining the scheduler parameter and/or the shaper parameter in case a first predetermined threshold related to the indication of contention or the predicted indication of contention is exceeded.

In another embodiment, the means are further configured for: obtaining the historical bandwidth utilization indication over a plurality of respective time windows; and determining the scheduler parameter and/or the shaper parameter based on a plurality of respective second predetermined thresholds, respective one of said time windows being associated with at least one of said respective second predetermined thresholds.

The means can also be further configured for: restoring the scheduler parameter and/or the shaper parameter to a default value in case a third predetermined threshold related to the indication of contention is/will be exceeded.

In one embodiment, the means are further configured for: storing values of the scheduler parameter and/or the shaper parameter over said predetermined respective time intervals; and determining the scheduler parameter(s) and/or the shaper parameter(s) further based on the values thereof.

In one other embodiment, the means are further configured for: implementing a reinforcement learning algorithm for determining said scheduler and/or said shaper parameter based on said indication of contention; said historical bandwidth utilization indication, and previous values of said scheduler and/or said shaper parameters.

In yet another embodiment, the means are further configured for: determining, based on the indication of contention and the historical bandwidth utilization indication, scheduler parameters and/or shaper parameters for respective ones of the participants of the network.

In one other embodiment, the scheduler parameter indicates a weight corresponding to the participant of the network for use in a Weighted Fair Queue scheduler, and the shaper parameter indicates a limit of the bandwidth allocated to the participants of the network.

In some embodiments, the participant of the network is a subscriber of a network operator.

In some other embodiments, the participant of the network is a virtual network operator or a subscriber of the virtual network operator.

In one embodiment, the means comprises: at least one processor; and at least one memory including computer program code, the at least one memory and computer program code configured to, with the at least one processor, cause the performance of the apparatus.

According to a second aspect of the invention, there is provided a method comprising: obtaining an indication of contention of a communications network; obtaining a historical bandwidth utilization indication parameter of respective participants of the communications network; determining, based on the indication of contention and the historical bandwidth utilization indication, a scheduler parameter and/or a shaper parameter for being provided to an output of the apparatus, wherein, the scheduler parameter and/or the shaper parameter is related to allocating bandwidth to a participant of the network.

According to a third aspect of the invention, there is provided a computer program comprising instructions for causing an apparatus to perform at least the following: obtaining an indication of contention of a communications network; obtaining a historical bandwidth utilization indication parameter of respective participants of the communications network; determining, based on the indication of contention and the historical bandwidth utilization indication, a scheduler parameter and/or a shaper parameter for being provided to an output of the apparatus, wherein, the scheduler parameter and/or the shaper parameter is related to allocating bandwidth to a participant of the network.

According to a fourth aspect of the invention, there is provided an apparatus comprising at least one processor and at least one memory including computer program code, the at least one memory and the computer program code configured to with the at least one processor, cause the apparatus at least to perform: obtaining an indication of contention of a communications network; obtaining a historical bandwidth utilization indication parameter of respective participants of the communications network; determining, based on the indication of contention and the historical bandwidth utilization indication, a scheduler parameter and/or a shaper parameter for being provided to an output of the apparatus, wherein, the scheduler parameter and/or the shaper parameter is related to allocating bandwidth to a participant of the network.

According to a fifth aspect of the invention, there is provided a non-transitory computer readable medium comprising program instructions for causing an apparatus to perform at least the following: obtaining an indication of contention of a communications network; obtaining a historical bandwidth utilization indication parameter of respective participants of the communications network; determining, based on the indication of contention and the historical bandwidth utilization indication, a scheduler parameter and/or a shaper parameter for being provided to an output of the apparatus, wherein, the scheduler parameter and/or the shaper parameter is related to allocating bandwidth to a participant of the network.

According to a sixth aspect of the invention, there is provided a computer readable medium comprising program instructions for causing an apparatus to perform at least the following: obtaining an indication of contention of a communications network; obtaining a historical bandwidth utilization indication parameter of respective participants of the communications network; determining, based on the indication of contention and the historical bandwidth utilization indication, a scheduler parameter and/or a shaper parameter for being provided to an output of the apparatus, wherein, the scheduler parameter and/or the shaper parameter is related to allocating bandwidth to a participant of the network.

According to the example embodiments, the bandwidth allocated to the participant of the network can be dynamically adjusted according to the available resource as well as the historical behaviour of the participant. Thus, a closed-loop automation is provided, and a long-term fairness can be guaranteed.

Brief description of the figures

For a more complete understanding of example embodiments of the present invention, reference is now made to the following descriptions taken in connection with the accompanying drawings in which:

Figure 1 shows a part of an exemplifying communication network in which examples of disclosed embodiments may be applied;

Figure 2 shows a functional block diagram according to one example embodiment of an apparatus 201;

Figure 3 shows an example regulation rule according to an example implementation;

Figure 4 shows a flow diagram according to one example method implementation which apparatus 201 may perform;

Figure 5a and 5b show a comparison of bandwidth utilization results according to state of the art and an example embodiment;

Figure 6 shows a functional block diagram according to another example embodiment of an apparatus 202;

Figure 7 shows a flow diagram according to one further example method implementation which apparatus 202 may perform;

Figure 8 shows a functional block diagram according to yet another example embodiment of an apparatus 203;

Figure 9 shows a flow diagram according to yet another example method implementation which the apparatus 203 may perform;

Figure 10 shows an implementation scenario according to yet another example embodiment of apparatus 204, 205, and 206;

Figure 11 shows a block diagram depicting the apparatus 200 operating in accordance with an example embodiment;

Figure 12 shows an example method 1200 incorporating aspects of the example embodiments.

Same or similar reference numerals refer to same or similar parts or components.

Detailed description

Example embodiments of the present application are described herein in detail and shown by way of example in the drawings. It should be understood that, although specific embodiments are discussed herein there is no intent to limit the scope of the invention to such embodiments. To the contrary, it should be understood that the embodiments discussed herein are for illustrative purposes, and that modified and alternative embodiments may be implemented without departing from the scope of the invention as defined in the claims. The sequence of method steps is not limited to the specific embodiments, the method steps may be performed in other possible sequence. Similarly, specific structural and functional details disclosed herein are merely representative for purposes of describing the embodiments. The invention described herein, however, may be embodied in many alternate forms and should not be construed as limited to only the embodiments set forth herein.

According to the state of the art, contention in the network is limited by shaping the entire traffic flowing through a given network link, without user differentiation. The historical bandwidth utilization of individual users is not considered while shaping the traffic, it is not possible to mitigate contention while preserving user fairness.

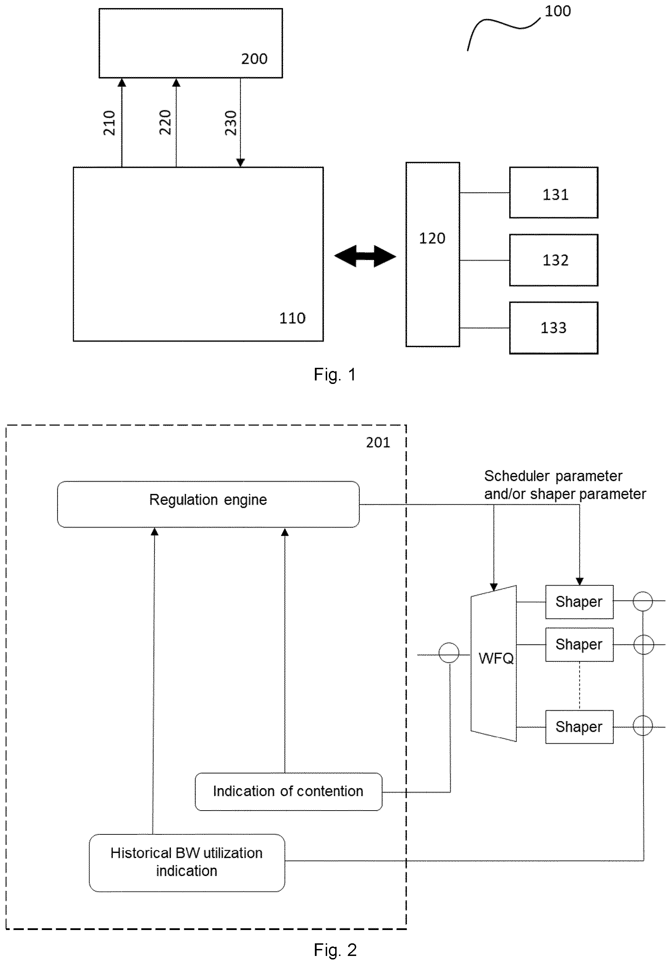

Figure 1 shows a part of an exemplifying communication network in which examples of disclosed embodiments may be applied. It is apparent to a person skilled in the art that the communication network typically comprises also other functions and structures than those shown in Figure 1.

The communication network 100 may be a fibre network. Alternatively, it may also be a cable network, e.g. a DSL or coaxial network, or also a mobile network, or any combination of both fixed and wireless network. Generally, the communication network 100 may be any shared medium communication network.

Generally, the communication network 100 comprises a network controller 110 which is communicatively connected to a network node 120. The communication network 100 also comprises a plurality of network participants 131, 132, 133 connected to the network node 120. Although only one network node 120 is shown in Fig.1, a skilled person shall understand that there may be more than one network node 120 in the communication network 100. The network controller 110 is configured to monitor the bandwidth utilization of network participants 131, 132, 133 and provides visibility and control on the network participants to the network operator managing the communication network 100.

Not shown on Figure 1, a Weighted Fair Queue scheduler and/or a traffic shaper may be implemented in the network node 120 in connection with the plurality of network participants 131, 132, 133, to adjust the bandwidth allocated to respective ones of the plurality of network participants 131, 132, 133. Those Weighted Fair Queue scheduler and traffic shaper will be further discussed.

In one example embodiment, the communication network 100 may refer to a traditional access network, where a single network operator owns the access network nodes 120 and for which the network controller 110 provides visibility and control on all the network participants 131, 132, 133 connected to the access network nodes 120. In this example embodiment, the participants 131, 132, 133 of the access network 100 are subscribers of the single network operator.

In another example embodiment, the communication network 100 may refer to a virtual access network (or network slice) operated by a VNO who is buying/renting a part of the resources of the access network nodes 120 to an InP. In this example embodiment, the participants 131, 132, 133 of the virtual access network 100 are subscribers of the VNO.

In this mode, there could be multiple VNOs sharing the same access network node 120, but the network controller 110 only provides visibility and control to the VNOs on their own subscribers. Seen from a VNO, as the network controller 110 only provide a partial view of the access node 120, corresponding to the interfaces where only his subscribers are connected to, this partial view of the access node is sometimes referred to as a virtual access node.

In yet another example embodiment, the communication network 100 may refer to network of virtual access networks, operated by an InP who is reselling/lending resources of this access node to one or more VNOs. In this example embodiment, the participants 131, 132, 133 of the network of virtual access networks 100 are VNOs.

In this mode, it must be understood that the network controller 110 provides visibility and control to the InP on the network participants 131, 132, 133, namely the VNOs, but not on the subscribers of those VNOs.

The network controller 110 is configured to communicate with the apparatus 200 implementing example embodiments of the present application, by providing input 210, 220 to the apparatus 200 and receiving the output 230 of the apparatus 200.

A skilled person shall understand that although the apparatus 200 is shown in Figure 1 as separated from the network controller 110, in another example implementation it may be implemented as part of the network controller 110.

The apparatus 200 is configured to obtain an indication of contention of a communication network.

Specifically, in one example implementation, the apparatus may comprise means which are further configured to obtain the indication of contention as indicating a ratio of time, during which the bandwidth utilized by the participants of the network causes a contention.

More specifically, in one example, based on the actual total Bandwidth utilization of all the active network participants in the communication network during a predetermined time period, for example 5 minutes, the indication of contention is determined as a ratio of aggregated time interval(s) to the predetermined time period, during the time interval(s) the bandwidth utilized by the plurality of network participants is above a predetermined threshold, for example 95% of the total available Bandwidth.

The indication of contention is used to monitor how close is the actual Bandwidth utilization to the total link capacity (or how close is the link to contention). In other words, the indication of contention is used to monitor the remaining available bandwidth that the WFQ scheduler can still distribute to any participant of the network creating an extra demand (for example doing a speed test). Due to the rapidly varying traffic demand induced by web surfing, online gaming or other variable Bandwidth type of application, it is advantageous to monitor this remaining capacity over short periods of time, typically in the order of magnitude of user perception (in seconds). Depending on the desired loop reaction time, the contention may be expressed as a ratio of a larger time period (e.g. contention of 1% during the last 5 minutes).

It is advantageous that the indication of contention is determined in the network controller 110. However, as for determining the indication of contention, the throughput is monitored at fast pace (order of magnitude of a few seconds) and an aggregate is calculated over a longer time interval (percentage of contention in the last 5 minutes), if it would not be possible to stream the throughput measurement from the access network node 120 to the network controller 110 fast enough, the indication of contention may also be determined in the access network nodes 120 itself. In this case, only the aggregated contention level is streamed to the network controller 110.

The apparatus 200 is further configured to obtain a historical bandwidth utilization indication parameter of respective participants of the communications network.

Specifically, in one example implementation, the apparatus 200 may comprise means which are further configured to obtain the historical bandwidth utilization indication as indicating historical bandwidth consumption of respective ones of the participants of the network over at least one time window, advantageously over a plurality of time windows. For example, the network controller 110 or the access network nodes 120 may determine, for every participant of the network, the actual Bandwidth utilization over the last 5 minutes, last 15 minutes, last 1h, last 4h, last day, last week, last month, etc.

The apparatus 200 is further configured to determine, based on the indication of contention and the historical bandwidth utilization indication, a scheduler parameter and/or a shaper parameter for being provided to the output of the apparatus, wherein, the scheduler parameter and/or the shaper parameter is related to allocating bandwidth to a participant of the network.

The advantage brought by the example embodiments is that the bandwidth allocated to the participant of the network can be adjusted according to the available resource as well as the historical behaviour of the participant, such that the total link utilization does not increase above a certain threshold, or in other words, that there will always be a minimum bandwidth available for the scheduler to distribute to the user in case of sudden load increase (or speedtest). Thus, a closed-loop automation is provided, and a user fairness can be provided.

In an advantageous embodiment, the apparatus 200 is further configured to repeat the obtaining of said indication of contention; the obtaining of said historical bandwidth utilization indication parameter and the determining of said scheduler parameter and/or said shaper parameter at predetermined time intervals.

According to such embodiment, the bandwidth allocated to the participant of the network can be thus dynamically adjusted, and a long-term user fairness can be guaranteed.

The predetermined time interval for repetition may relate to how often the indication of contention is updated.

Specifically, the time period for determining the indication of contention may be lower than or equal to the predetermined time interval for repetition. Setting the time period for determining the indication of contention equal to the predetermined time interval for repetition makes it easier to implement. If the time period for determining the indication of contention is lower than the predetermined time interval for repetition, it would mean that more than one contention indication per repetition interval is available, and in this case, an additional logic, e.g. computing the mean, median, maximum or any percentile of the multiple contention indications may be applied to aggregate the multiple contention indications.

In one example embodiment, the scheduler parameter indicates a weight corresponding to the participant of the network for use in a Weighted Fair Queue scheduler, and the shaper parameter indicates a limit of the bandwidth allocated to the participants of the network.

More specifically, for example, the weights may be represented either as floating numbers between 0 and 1, or by integers ranging from 0 to a maximum value that depends on the quantification (e.g. 255 for 8 bits quantification). The shaper limits may be expressed directly as data throughputs (bps, kbps, Mbps, Gbps, etc).

In one example embodiment, the apparatus 200 is further configured to determine, based on the indication of contention and the historical bandwidth utilization indication, scheduler parameters and/or shaper parameters for respective ones of the participants of the network.

A skilled person shall understand the scheduler parameters and/or shaper parameters may be updated periodically for each participant of the network, but the updated scheduler parameters and/or shaper parameters of some of the participants may stay same as the default value or as the value in the previous cycle.

Figure 2 shows a functional block diagram according to one example embodiment of an apparatus 201.

As shown in this depicted embodiment of Figure 2, the apparatus 201 comprises a regulation engine which is fed with the indication of contention and the historical bandwidth utilization indication, measured from the communication network 100 that the apparatus 201 is to control. The indication of contention is obtained upstream of the WFQ scheduler, indicating the remaining available bandwidth that the WFQ scheduler can still distribute to any participant of the network 100. The historical bandwidth utilization indication of respective participants of the communications network is obtained downstream of the WFQ scheduler and the shaper, the parameter of which may be determined by the regulation engine or generally by the apparatus 201. Thus, the historical bandwidth utilization indication of respective participants is related to the scheduler parameter and/or a shaper parameter determined by the regulation engine or generally by the apparatus 201, and may be considered as a feedback from the communication network 100.

Furthermore, the regulation engine determines the scheduler parameter and/or shaper parameter for respective participants based on the indication of contention and the historical bandwidth utilization indication of respective participants of the communications network. The scheduler parameter and/or shaper parameter determined by the regulation engine is further fed to the WFQ scheduler and the shaper for respective participant respectively. Thus, a closed-looped automation is provided.

In some embodiments, such as the one shown in Fig. 2, the apparatus 201 can comprise a module for measuring contention upstream of the WFQ scheduler. In other embodiments this can be performed by a module outside of the apparatus, for example in the network controller 110, which then provides this measurement to the apparatus 201. In the embodiment of Fig. 2, the apparatus 201 also comprises a module of measuring the historical bandwidth utilization, which may be considered as a feedback signal from the communication network 100. In other embodiments, this module can also be outside of the apparatus 201, for example in the network controller 110. The apparatus 201 may comprise a module for receiving the indication of contention and/or the historical bandwidth utilization.

Methods for performing measurement of the historical bandwidth utilization are commonly known by a person skilled in the art and may comprise the periodical collection by the network controller 110 of counters implemented in the network node 120 such as the in-octets and out-octets counters as defined by RFC7223 (A YANG Data Model for Interface Management).

The regulation engine may dynamically adjust the WFQ scheduler weights and shaper limits such that the total link utilization does not increase above a certain threshold, or in other words, that there will always be a minimum BW available for the scheduler to distribute to the user in case of sudden load increase or potential speedtest.

In one example implementation, the indication of contention and the historical bandwidth utilization indication may be obtained by the network controller 110 and stored in its memory sometimes known as data lake. The regulation engine, which forms part of the apparatus, may be implemented as a virtual network function, abbreviated by VNF, meaning that it is implemented by software in the network controller 110, reading data from the data lake and pushing back new configuration parameters (scheduler parameter and/or shaper parameter) directly to the corresponding WFQ scheduler and/or shaper.

There are many ways of implementing the regulation engine shown in Figure 2.

In one example embodiment, the apparatus 201 is further configured to determine the scheduler parameter and/or the shaper parameter in case a first predetermined threshold related to the indication of contention is exceeded.

For example, if the indication of contention is above the first predetermined threshold, it suggests that the remaining available bandwidth that can still be distribute to any participant of the network creating an extra demand (for example doing a speed test) is not enough. Therefore, it is then meaningful to adjust the scheduler parameter and/or the shaper parameter so as to reduce to contention in the network.

In one example embodiment, the apparatus 201 is further configured to obtain the historical bandwidth utilization indication over a plurality of respective time windows, and to determine the scheduler parameter and/or the shaper parameter based on a plurality of respective second predetermined thresholds, respective one of said time windows being associated with at least one of said respective second predetermined thresholds.

Specifically, in one example implementation, if the indication of contention is above the first predetermined threshold, the apparatus 201 is further configured to reduce the scheduler parameter and/or the shaper parameter for the network participant, the historical bandwidth utilization indication of which is above the respective second predetermined threshold corresponding to the respective time window.

Such example implementations may also be referred to as using rule-based regulation engine.

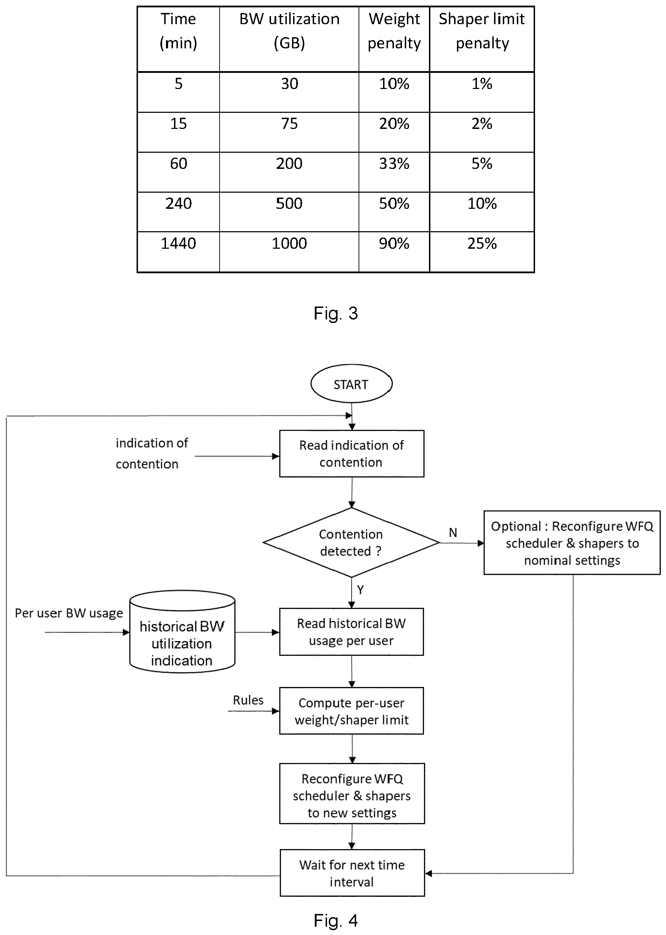

Figure 3 shows an example regulation rule according to an example implementation.

In the example implementation shown in Figure 3, the second predetermined thresholds are defined in terms of data volume (GB) for each historical bandwidth utilization indication observed time window. Penalty on the scheduler parameter and the shaper parameter are also defined for the each of the second predetermined threshold. A skilled person shall understand, although the penalty on the scheduler parameter and the shaper parameter are both defined in the example shown in Figure 3, it is not necessary to apply both of them.

Specifically, if the historical bandwidth utilization indication of a participant during certain time window is above the second predetermined threshold corresponding to that time window, the corresponding penalty will be applied to the scheduler parameter and/or the shaper parameter of this abusing participant.

For example, if the historical bandwidth utilization indication of the participant 131 during past 15 mins is above 75 GB, the scheduler parameter will be reduced by 20% and/or the shaper parameter will be reduced by 2% for the participant 131.

In another implementation, more than one second predetermined thresholds may be defined for a certain time window. Meanwhile different penalty levels may be defined accordingly. For example, if the historical bandwidth utilization indication of the participant 131 during past 60 mins is above 200GB, the scheduler parameter will be reduced by 33 % and/or the shaper parameter will be reduced by 5% for the participant 131. If the historical bandwidth utilization indication of the participant 132 during past 60 mins is above 100GB, the scheduler parameter will be reduced by 25 % and/or the shaper parameter will be reduced by 4% for the participant 132. In this case, when the historical bandwidth utilization indication of the participant crosses more than one second predetermined thresholds for the same time window, the most sever, namely, the higher penalty is applied.

Specifically, in the example implementation shown in Figure 3, applying a relative penalty on the scheduler parameter can be done using the following formula:

$$\text{New weight} = \text{Original weight} * (1\text{-penalty})$$

Alternatively, a weight can also be decreased by an absolute penalty. In this case, the formula to apply would become:

$$\text{New weight} = \text{Original weight -penalty}$$

In the example implementation shown in Figure 3, applying a relative penalty on the shaper parameter can be done using the following formula:

$$\text{New shaper limit} = \text{Original shaper limit} * (1\text{-penalty})$$

Alternatively, a shaper limit can also be decreased by an absolute penalty. In this case, the formula to apply would become:

$$\text{New shaper limit} = \text{Original shaper limit} - \text{penalty}$$

Figure 4 shows a flow diagram according to one example method implementation which apparatus 201 may perform.

In the example implementation shown in Figure 4, on regular time interval, for example every 5 minutes, the indication of contention is read. If the indication of contention is above the first predetermined threshold, it suggests that contention is detected, the historical BW utilization of all the subscribers connected to the WFQ scheduler are retrieved. Some rules (like a set of predetermined penalties as shown in Figure 3) are then applied to determine the new WFQ weights and/or shaper limits to apply.

Advantageously, the apparatus 201 is further configured to restore the scheduler parameter and/or the shaper parameter to a default value in case a third predetermined threshold related to the indication of contention is exceeded.

Specifically, for example, when the indication of contention falls below the third predetermined threshold, it suggests that no contention is detected anymore. Then the scheduler parameter and/or the shaper parameter may be restored to the default value, either immediately in one step, progressively (steps-by-steps) or in a single step after a certain delay.

According to such example embodiment, long-term user fairness can be guaranteed while maximizing the bandwidth utilization.

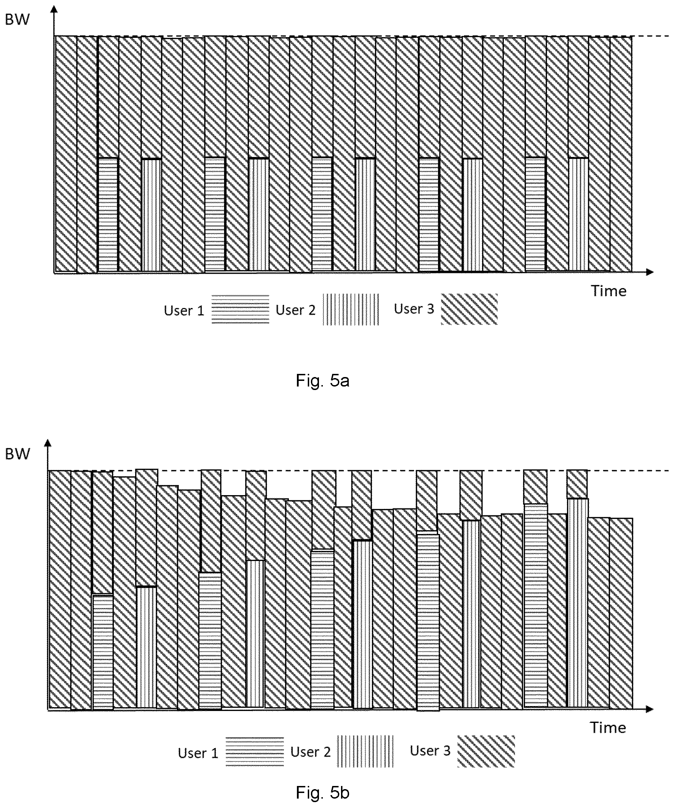

Figure 5a and 5b show a comparison of bandwidth utilization results according to state of the art and an example embodiment of the invention.

Figure 5a shows a possible bandwidth utilization result according to state of the art. Specifically, example bandwidth utilization of 3 users is shown over certain period of time.

In this example, 3 users are connected to a WFQ scheduler and configured with the same weight. If the 3 users are requesting the peak capacity on different time, such as each of them can access the maximum bandwidth. However, if one of the subscribers would not behave like a typical residential subscriber, and for any reason request a maximum of bandwidth in permanence, this would have a significant impact on all the other subscribers, preventing them to access a high bandwidth all the time, even if they request it only from time to time.

This situation is shown in Figure 5 a, user 3 is continuously loading the link, such as, when User 1 or User 2 are requesting some capacity, they can only get half of the maximum bandwidth.

Figure 5b shows a possible bandwidth utilization result according to an example embodiment. Similarly, example bandwidth utilization of 3 users is shown over certain period of time.

As shown in Figure 5b, due to his very high and permanent bandwidth utilization, the shaper limit as well as the weight of user 3 are progressively reduced. The shaper limit reduction restores some minimum spare capacity in the case of a sudden increase of demand of the other users (or speedtest), and prevents permanent congestion. The weight reduction gives more priority to other (fair) users when contention still occasionally happens.

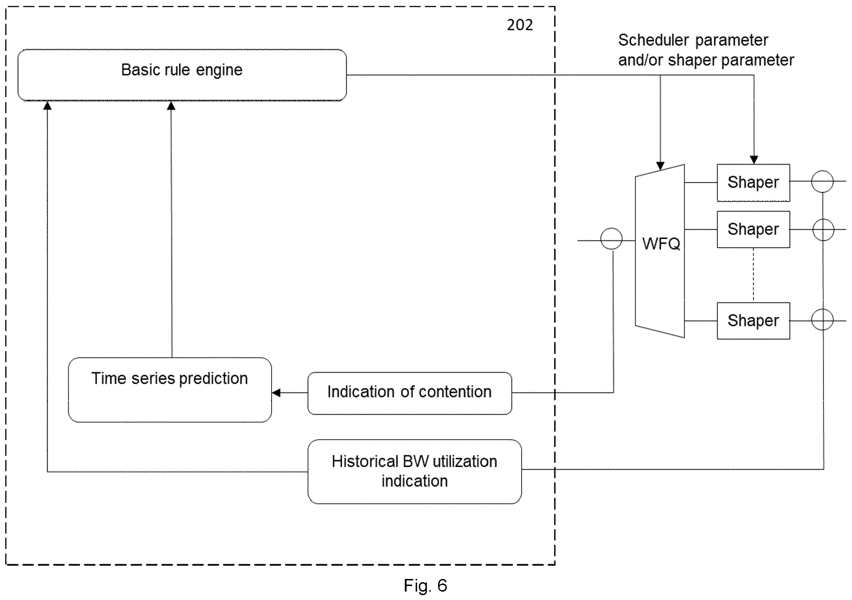

Figure 6 shows a functional block diagram according to another example embodiment of an apparatus 202.

In the example embodiment, the apparatus 202 is further configured to determine a predicted indication of contention, based on history of the obtained indication of contention; and determine the scheduler parameter and/or the shaper parameter further based on the predicted indication of contention.

For example, similar as described for the previous embodiment, the apparatus 202 may determine the scheduler parameter and/or the shaper parameter in case a first predetermined threshold related to the predicted indication of contention is exceeded.

As shown in Figure 6, instead of feeding the indication of contention directly to the regulation engine, an AI module is inserted in between, that is trained to predict contention in the next time interval based on past contention measurements. This time-series prediction module allows to react faster (reducing the loop reaction time), reducing further the contention time.

Specifically, any time-series prediction algorithm can be used, included but not limited to classical machine learning algorithms like moving averages (simple, weighted, exponential, ...) and regression (linear, auto-regression, ARIMA and variants), as well as deep learning techniques such as artificial neural networks, convolutional neural networks (CNN), recurrent neural networks (RNN), Long-Short Term Memory (LSTM), Temporal Convolutional network (TCN), regression trees, random forest, etc.

Other functions of the apparatus 202 are similar as those described for apparatus 200, 201, and will not be repeated here.

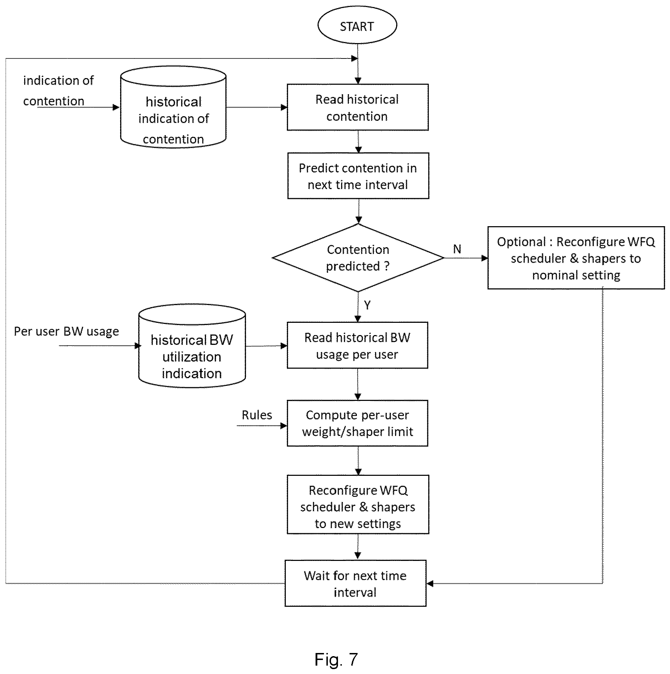

Figure 7 shows a flow diagram according to one further example method implementation which apparatus 202 may perform.

In the example implementation shown in Figure 7, indication of contention for previous time interval may be stored to form historical indication of indication. The prediction engine needs to be fed by the history (n last measured values) of the indication of contention instead of just the latest measurement.

Different from the previous implementation, the detection of contention here in Figure 7 is not determined directly based on the indication of contention, but based on a prediction of the indication of contention for the next time interval.

For example, if the prediction of the indication of contention is above the first predetermined threshold for the next time interval, the scheduler parameter and/or the shaper parameter will be reduced for the network participant, the historical bandwidth utilization indication of which is above the respective second predetermined threshold corresponding to the respective time window.

Similar as it is described for Figure 4, the entire workflow must be scheduled on regular time intervals, for example every 5 minutes.

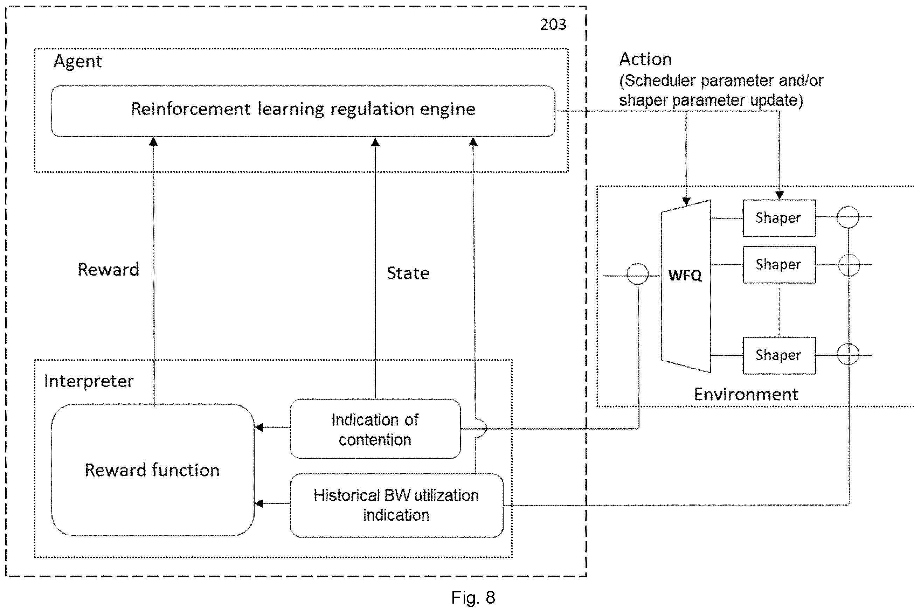

Figure 8 shows a functional block diagram according to yet another example embodiment of an apparatus 203.

In the example embodiment, the apparatus 203 is further configured to store values of the scheduler parameter and/or the shaper parameter over said predetermined respective time intervals; and to determine the scheduler parameter(s) and/or the shaper parameter(s) further based on the values thereof.

In the example embodiment, the apparatus 203 is further configured to implement a reinforcement learning algorithm for determining said scheduler and/or said shaper parameter based on said indication of contention; said historical bandwidth utilization indication, and previous values of said scheduler and/or said shaper parameters.

In the typical framing of a Reinforcement Learning (RL) scenario, an agent takes actions in an environment, which is interpreted into a reward and a representation of the state, which are fed back into the agent.

A reinforcement learning agent interacts with its environment in discrete time steps. At each time t, the agent receives the current state and reward. It then chooses an action from the set of available actions, which is subsequently sent to the environment. The environment moves to a new state and the reward associated with the transition is determined. The goal of a reinforcement learning agent is to learn a policy which maximizes the expected cumulative reward.

As illustrated in Figure 8, this concept is applied to this example embodiment such as:

- The environment is made of the WFQ scheduler followed by the traffic shapers, as well as the different subscribers connected to them and generating traffic (not shown on the figure)
- The interpreter is made of:

  - the indication of contention and the historical bandwidth utilization indication, as described previously. Those indications "interpret" the environment (quantify some of its characteristics) by generating some observable states, i.e. the contention level at the root of the scheduler and the historical BW utilization of the subscribers. The states can be either discrete or continuous. For example, the indication of contention may take form of a discrete state such as "0=below threshold, 1=above threshold" or a continuous state such as "contention level = x%". Similarly, the historical bandwidth utilization indication may take form of discrete state(s) such as "0=below threshold, 1=above threshold" for a plurality of thresholds corresponding to different time windows (such as in Figure 3) or a continuous state made of an array of the BW utilizations of the subscribers measured during the n last iteration cycles.
  - the reward function that, based on the states, computes a metric (the reward) that the agent will maximize. As it is desired to minimize the contention time while maximizing the utilization of the available bandwidth, the reward function will combine those factors, for example via a weighted sum (and a change of sign when necessary, such as the reward is maximized when the contention time is minimized and the historical bandwidth utilization indication is maximized).

- The reinforcement learning agent (RL agent, or just "Agent") will learn a policy that determines, based on previously observed states and instantaneous rewards, the next best action to apply on the scheduler parameter and/or shaper parameter to maximize the cumulative reward. Here also the actions can be either discrete (increase or decrease a WFQ scheduler weight or shaper limit by a predefined step) or continuous (set a WFQ scheduler weight or shaper limit to a new value). Depending on the implementation choice (discrete or continuous state and action spaces), different reinforcement learning algorithms can be used. Any reinforcement learning algorithms that are developed before or after the filing date may be used.

In the example implementation shown in Figure 8, a reward function is determined based on the indication of network contention and the historical bandwidth utilization indication, wherein the reward function increases when indication of network contention decreases, and the reward function decreases when the historical bandwidth utilization indication decreases. The scheduler parameter(s) and/or the shaper parameter(s) may further be determined using a reinforcement learning algorithm while maximizing the reward function.

Alternatively, in another example implementation, a cost function may be determined based on the indication of network contention and the historical bandwidth utilization indication, wherein the cost function increases when indication of network contention increases, and the cost function decreases when the historical bandwidth utilization indication increases. The scheduler parameter(s) and/or the shaper parameter(s) may further be determined using a reinforcement learning algorithm while minimizing the cost function.

Other functions of the apparatus 203 are similar as those described for apparatus 200, 201, 202 and will not be repeated here.

The advantage of such an AI-based engine is that, to the opposite of a rule-based engine that needs to be updated as new services are introduced or bandwidth demand increases, the system here automatically adapts itself to new conditions (at least if the newly introduced services are best effort).

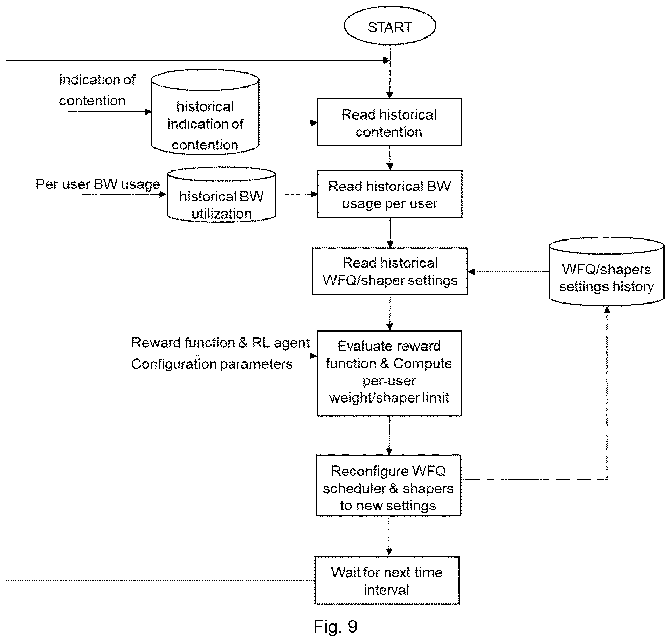

Figure 9 shows a flow diagram according to yet another example method implementation which the apparatus 203 may perform.

As shown in Figure 9, indication of contention for previous time interval may be stored to form historical indication of indication. To enable the reinforcement learning algorithm to learn from past actions, the previously configured scheduler parameter and/or the shaper parameter are stored in a database.

The scheduler parameter(s) and/or the shaper parameter(s) is determined based on the historical indication of contention, historical bandwidth utilization indication and the historical values of the scheduler parameter and/or the shaper parameter.

Similar as it is described for previous implementations, such a workflow may be executed in regular time intervals, for example every 5 minutes.

Example embodiments have been described for scheduling at the level of network operator, wherein the participants of the network are subscribers of a network operator.

In another example embodiment, the participant of the network are virtual network operators and/or subscribers of a virtual network operator.

Namely, the example embodiments may also be implemented at infrastructure provider (InP) level or even hierarchically.

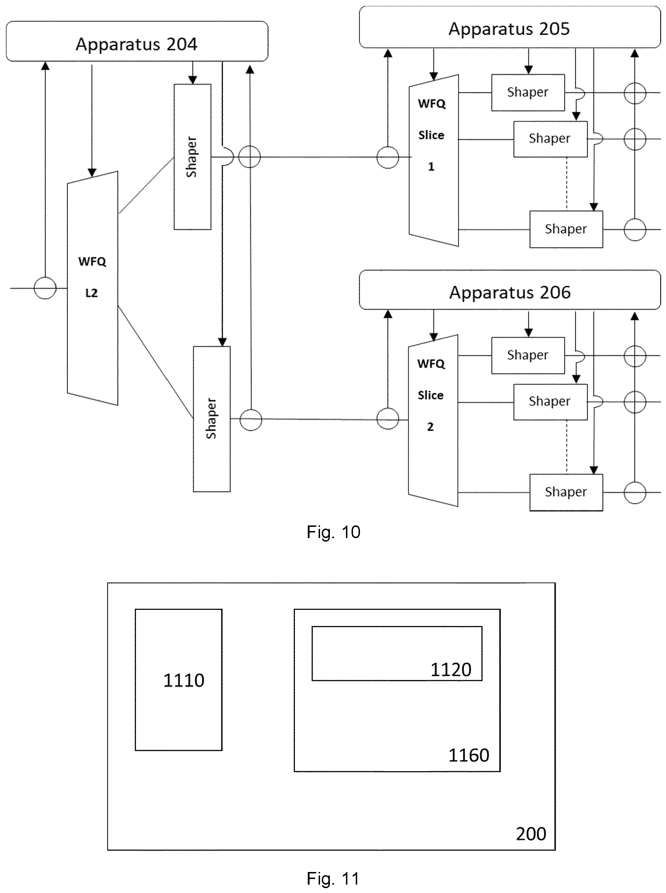

Figure 10 shows an implementation scenario according to yet another example embodiment of apparatus 204, 205, and 206.

As shown in Figure 10, a VNO is buying/renting a network slice from the telecommunication infrastructure provider (InP) and sells internet access services to its subscribers. The VNO is responsible for the QoS delivered to its subscribers as well as the overbooking within its own slice. However, the InP can offer network slices to multiple VNOs and introduce overbooking at slice level.

For example, a physical PON (limited to 2.4Gbps) is shared between VNO 1 and VNO 2, VNO 1 and VNO 2 are respectively serving a plurality of subscribers (only 3 are shown in Figure 10 for simplicity). The InP (PON owner) is overbooking its capacity towards the two VNOs, and each VNOs may further overbook the capacity of its slice towards its own subscribers.

Aspects of the invention may be implemented at the InP level and/or the VNO level in the above-described scenario.

In the example embodiment shown in Figure 10, hierarchical WFQ schedulers are implemented at the InP level and the VNO level. Furthermore, at the VNO level, one shaper is configured for each subscriber, meanwhile at the InP level, for each VNO there is configured one shaper, limiting the maximum bandwidth that each VNO can access.

At VNO level, apparatus 205, 206 are implemented for each of the VNOs. Each apparatus 205, 206 determines scheduler parameter and/or the shaper parameter for the subscribers of the respective VNO based on the indication of contention at VNO level and the historical bandwidth utilization indication parameter of each subscriber in the VNO. The determined scheduler parameter and/or the shaper parameter will be provided to the respective level 1 WFQ scheduler and the respective shaper.

At InP level, an apparatus 204 determines scheduler parameter and/or the shaper parameter for each VNO based on the indication of contention at InP level and the historical bandwidth utilization indication parameter of each VNO.

A skilled person shall understand, the number of VNOs is shown here in Figure 10 merely for example. The InP may configure any other number of VNOs. Although shown in Figure 10 as a hierarchical implementation in both VNO level and InP level, aspects of the invention may be implemented in either level. Meanwhile, it is also not necessary to have all the VNOs implementing example embodiments of the invention.

Figure 11 is a block diagram depicting the apparatus 200 operating in accordance with an example embodiment. The block diagram may apply to any of the above-described apparatus 201, 202, 203, 204, 205 and 206 as well. The apparatus 200 may be, for example, an electronic device such as a chip, chip-set, an electronic device or an access network controller. The apparatus 200 includes a processor 1110 and a memory 1160. In other examples, the apparatus 200 may comprise multiple processors.

In the example of Figure 11, the processor 1110 is a control unit operatively connected to read from and write to the memory 1160. The processor 1110 may also be configured to receive control signals received via an input interface and/or the processor 1110 may be configured to output control signals via an output interface. In an example embodiment the processor 1110 may be configured to convert the received control signals into appropriate commands for controlling functionalities of the apparatus.

The memory 1160 stores computer program instructions 1120 which when loaded into the processor 1110 control the operation of the apparatus 200 as explained above. In other examples, the apparatus 200 may comprise more than one memory 1160 or different kinds of storage devices.

Computer program instructions 1120 for enabling implementations of example embodiments of the invention or a part of such computer program instructions may be loaded onto the apparatus 200 by the manufacturer of the apparatus 200, by a user of the apparatus 200, or by the apparatus 200 itself based on a download program, or the instructions can be pushed to the apparatus 200 by an external device. The computer program instructions may arrive at the apparatus 200 via an electromagnetic carrier signal or be copied from a physical entity such as a computer program product, a memory device or a record medium such as a Compact Disc (CD), a Compact Disc Read- Only Memory (CD-ROM), a Digital Versatile Disk (DVD) or a Blu-ray disk.

According to an example embodiment, the apparatus 200 comprises means, wherein the means comprises at least one processor 1110, at least one memory 1160 including computer program code 1120, the at least one memory 1160 and the computer program code 1120 configured to, with the at least one processor 1110, cause the performance of the apparatus 200.

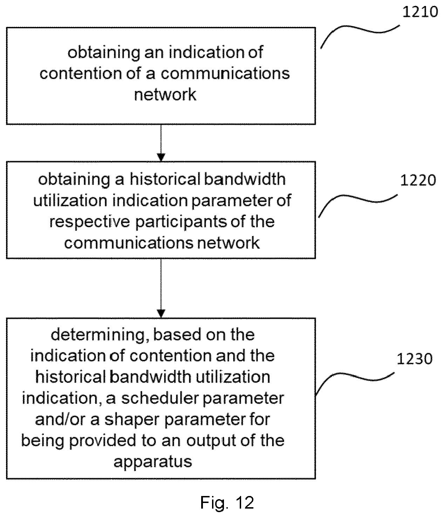

Figure 12 illustrates an example method 1200 incorporating aspects of the previously disclosed embodiments.

The method starts with obtaining 1210 an indication of contention of a communications network. The method continues with obtaining 1220 a historical bandwidth utilization indication parameter of respective participants of the communications network. The method further continues with determining 1230, based on the indication of contention and the historical bandwidth utilization indication, a scheduler parameter and/or a shaper parameter for being provided to an output of the apparatus, wherein, the scheduler parameter and/or the shaper parameter is related to allocating bandwidth to a participant of the network.

A skilled person shall understand that the sequence of the method is not limited to the illustrated example. The method may be implemented in other sequence. For example, the indication of contention and the historical bandwidth utilization indication may be obtained together in one step or the historical bandwidth utilization indication may be obtained prior to the indication of contention.

Without in any way limiting the scope, interpretation, or application of the claims appearing below, a technical effect of one or more of the example embodiments disclosed herein is that the bandwidth allocated to the participant of the network can be adjusted according to the available resource as well as the historical behaviour of the participant, such that the total link utilization does not increase above a certain threshold, or in other words, that there will always be a minimum bandwidth available for the scheduler to distribute to the user in case of sudden load increase (or speedtest). Thus, a closed-loop automation is provided, and a user fairness can be provided.

Example embodiments may be applied to both upstream and downstream bandwidth allocation.

Embodiments of the present invention may be implemented in software, hardware, application logic or a combination of software, hardware and application logic. The software, application logic and/or hardware may reside on the apparatus, a separate device or a plurality of devices. If desired, part of the software, application logic and/or hardware may reside on the apparatus, part of the software, application logic and/or hardware may reside on a separate device, and part of the software, application logic and/or hardware may reside on a plurality of devices. In an example embodiment, the application logic, software or an instruction set is maintained on any one of various conventional computer-readable media. In the context of this document, a 'computer- readable medium' may be any media or means that can contain, store, communicate, propagate or transport the instructions for use by or in connection with an instruction execution system, apparatus, or device, such as a computer, with one example of a computer described and depicted in Figure 11. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It will be obvious to a person skilled in the art that, as the technology advances, the inventive concept can be implemented in various ways. The invention and its embodiments are not limited to the examples described above but may vary within the scope of the claims.

**Claims**

**1.** An apparatus (200, 201, 202, 203, 204, 205, 206), comprising means for:

- obtaining an indication of contention of a communications network (100);
- obtaining a historical bandwidth utilization indication parameter of respective participants (131, 132, 133) of the communications network;
- determining, based on the indication of contention and the historical bandwidth utilization indication, a scheduler parameter and/or a shaper parameter for being provided to an output of the apparatus, wherein, the scheduler parameter and/or the shaper parameter is related to allocating bandwidth to a participant (131, 132, 133) of the network.

2. The apparatus (200, 201, 202, 203, 204, 205, 206) according claim 1, wherein the means are further configured to repeat the obtaining of said indication of contention; the obtaining of said historical bandwidth utilization indication parameter and the determining of said scheduler parameter and/or said shaper parameter at predetermined time intervals.

3. The apparatus (202) according to any preceding claim, wherein the means are further configured for:

- determining a predicted indication of contention, based on history of the obtained indication of contention;
- determining the scheduler parameter and/or the shaper parameter further based on the predicted indication of contention.

4. The apparatus (201, 202) according to any preceding claim, wherein the means are further configured for:

- determining the scheduler parameter and/or the shaper parameter in case a first predetermined threshold related to the indication of contention or the predicted indication of contention is exceeded.

5. The apparatus (201, 202) according to any preceding claim, wherein the means are further configured for:

- obtaining the historical bandwidth utilization indication over a plurality of respective time windows;
- determining the scheduler parameter and/or the shaper parameter based on a plurality of respective second predetermined thresholds, respective one of said time windows being associated with at least one of said respective second predetermined thresholds.

6. The apparatus (201, 202) according to any preceding claim, wherein the means are further configured for:

- restoring the scheduler parameter and/or the shaper parameter to a default value in case a third predetermined threshold related to the indication of contention is/will be exceeded.

7. The apparatus (203) according to claim 2, wherein the means are further configured for:

- storing values of the scheduler parameter and/or the shaper parameter over said predetermined respective time intervals;
- determining the scheduler parameter(s) and/or the shaper parameter(s) further based on the values thereof.

8. The apparatus (203) according to claim 7, wherein the means are further configured for:

- implementing a reinforcement learning algorithm for determining said scheduler and/or said shaper parameter based on said indication of contention; said historical bandwidth utilization indication, and previous values of said scheduler and/or said shaper parameters.

9. The apparatus (200, 201, 202, 203, 204, 205, 206) according any preceding claim, wherein the means are further configured for:

- determining, based on the indication of contention and the historical bandwidth utilization indication, scheduler parameters and/or shaper parameters for respective ones of the participants (131, 132, 133) of the network.

10. The apparatus (200, 201, 202, 203, 204, 205, 206) according to any preceding claim, wherein the scheduler parameter indicates a weight corresponding to the participant (131, 132, 133) of the network for use in a Weighted Fair Queue scheduler, and the shaper parameter indicates a limit of the bandwidth allocated to the participants (131, 132, 133) of the network.

11. The apparatus (200, 201, 202, 203) according to any preceding claim, wherein the participant (131, 132, 133) of the network is a subscriber of a network operator.

12. The apparatus (200, 201, 202, 203, 204, 205, 206) according to any preceding claim, wherein the participant (131, 132, 133) of the network is a virtual network operator or a subscriber of the virtual network operator.

13. The apparatus (200, 201, 202, 203, 204, 205, 206) of any preceding claim, wherein the means comprises:

at least one processor; and
at least one memory including computer program code, the at least one memory and computer program code configured to, with the at least one processor, cause the performance of the apparatus.

14. A method, comprising:

- obtaining an indication of contention of a communications network;
- obtaining a historical bandwidth utilization indication parameter of respective participants of the communications network;
- determining, based on the indication of contention and the historical bandwidth utilization indication, a scheduler parameter and/or a shaper parameter for being provided to an output of the apparatus, wherein, the scheduler parameter and/or the shaper parameter is related to allocating bandwidth to a participant of the network.

15. A computer program comprising instructions for causing an apparatus to perform at least the following:

- obtaining an indication of contention of a communications network;
- obtaining a historical bandwidth utilization indication parameter of respective participants of the communications network;
- determining, based on the indication of contention and the historical bandwidth utilization indication, a scheduler parameter and/or a shaper parameter for being provided to an output of the apparatus, wherein, the scheduler parameter and/or the shaper parameter is related to allocating bandwidth to a participant of the network.

100

200

210 220 230

131

120

132

110

133

Fig. 1

201

Regulation engine

Scheduler parameter
and/or shaper parameter

Shaper

WFQ

Shaper

Shaper

Indication of contention

Historical BW utilization
indication

Fig. 2

| Time (min) | BW utilization (GB) | Weight penalty | Shaper limit penalty |
|------------|---------------------|----------------|----------------------|
| 5 | 30 | 10% | 1% |
| 15 | 75 | 20% | 2% |
| 60 | 200 | 33% | 5% |
| 240 | 500 | 50% | 10% |
| 1440 | 1000 | 90% | 25% |

Fig. 3

START

indication of contention → Read indication of contention

Contention detected ?

N → Optional : Reconfigure WFQ scheduler & shapers to nominal settings

Y

Per user BW usage → historical BW utilization indication → Read historical BW usage per user

Rules → Compute per-user weight/shaper limit

Reconfigure WFQ scheduler & shapers to new settings

Wait for next time interval

Fig. 4

Fig. 5a

Fig. 5b

Fig. 6

Fig. 7

Fig. 8

START

indication of contention → historical indication of contention → Read historical contention

Per user BW usage → historical BW utilization → Read historical BW usage per user

Read historical WFQ/shaper settings ← WFQ/shapers settings history

Reward function & RL agent Configuration parameters → Evaluate reward function & Compute per-user weight/shaper limit

Reconfigure WFQ scheduler & shapers to new settings

Wait for next time interval

Fig. 9

Fig. 10

Fig. 11

1210

obtaining an indication of
contention of a communications
network

1220

obtaining a historical bandwidth
utilization indication parameter of
respective participants of the
communications network

1230

determining, based on the
indication of contention and the
historical bandwidth utilization
indication, a scheduler parameter
and/or a shaper parameter for
being provided to an output of the
apparatus

Fig. 12

**EUROPEAN SEARCH REPORT**

Europäisches Patentamt
European Patent Office
Office européen des brevets

Application Number

EP 21 38 2040

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/120282 A1 (CARLSON WILLIAM S [US] ET AL) 8 June 2006 (2006-06-08) | 1-3,5-15 | INV. H04L12/815 H04L12/863 H04L12/867 |
| Y | * abstract * * paragraph [25;31]; figures 2-31 * * paragraph [0079] - paragraph [0085] * * paragraphs [0090] - [0095] - paragraphs [0101] - [0109] * * paragraph [0121] - paragraph [0129] * * paragraphs [0140], [0150] - paragraph [0164] * | 4 | ADD. H04L12/801 |
| | ----- | | |
| Y | CN 102 958 182 A (ZTE CORP) 6 March 2013 (2013-03-06) * abstract * * paragraph [0037] - paragraph [0058]; figures 1-5 * | 4 | |
| | ----- | | |
| A | US 2006/280119 A1 (KARAMANOLIS CHRISTOS [US] ET AL) 14 December 2006 (2006-12-14) * paragraph [0018] - paragraph [0043]; figure 1 * | 1-15 | |
| | ----- | | TECHNICAL FIELDS SEARCHED (IPC) |
| A | EP 1 668 843 A1 (BRITISH TELECOMM [GB]) 14 June 2006 (2006-06-14) * the whole document * | 1-15 | H04L |
| | ----- | | |

The present search report has been drawn up for all claims

| Place of search | Date of completion of the search | Examiner |
|---|---|---|
| The Hague | 2 July 2021 | Svet, Victor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 38 2040

This annex lists the patent family members relating to the patent documents cited in the above-mentioned European search report.
The members are as contained in the European Patent Office EDP file on
The European Patent Office is in no way liable for these particulars which are merely given for the purpose of information.

02-07-2021

| Patent document cited in search report | | | Publication date | Patent family member(s) | | | Publication date |
|---|---|---|---|---|---|---|---|
| US 2006120282 | A1 | | 08-06-2006 | US | 2006120282 | A1 | 08-06-2006 |
| | | | | US | 2008037578 | A1 | 14-02-2008 |
| | | | | US | 2009207731 | A1 | 20-08-2009 |
| | | | | US | 2009213871 | A1 | 27-08-2009 |
| CN 102958182 | A | | 06-03-2013 | NONE | | | |
| US 2006280119 | A1 | | 14-12-2006 | NONE | | | |
| EP 1668843 | A1 | | 14-06-2006 | CA | 2538665 | A1 | 07-04-2005 |
| | | | | CN | 1860745 | A | 08-11-2006 |
| | | | | EP | 1668843 | A1 | 14-06-2006 |
| | | | | JP | 4540673 | B2 | 08-09-2010 |
| | | | | JP | 2007507922 | A | 29-03-2007 |
| | | | | KR | 20060090229 | A | 10-08-2006 |
| | | | | US | 2007081554 | A1 | 12-04-2007 |
| | | | | WO | 2005032068 | A1 | 07-04-2005 |

EPO FORM P0459

For more details about this annex : see Official Journal of the European Patent Office, No. 12/82